# EUROPEAN PATENT SPECIFICATION

(11) **EP 1 427 735 B1**
(45) Date of publication and mention of the grant of the patent: **08.08.2007**
(21) Application number: 02766111.5
(22) Date of filing: 27.08.2002
(51) Int. Cl.: C07F 7/08, C06B 45/00

(54) **ALKYNYLSILANES AS FUELS AND ROCKET PROPELLANTS**
ALKYNYLSILANE ALS BRENNSTOFF UND TREIBSTOFFE FÜR RAKETEN
ALKYNYLSILANES UTILISES EN TANT QU'ELEMENTS COMBUSTIBLES ET PROPERGOLS

(30) Priority: 27.08.2001 US 315146 P
(43) Date of publication of application: 16.06.2004
(73) Proprietor: Wiley Organics, Inc., Coshocton, OH 43812 (US)
(72) Inventor: WILEY, David, B., Warsaw, OH 43844 (US); KAPLAN, Gregory, Bexley, OH 43209 (US); DOBBINS, Thomas, Howard, OH 43028 (US)
(74) Representative: Carstairs, James Campbell
(86) International application number: PCT/US2002/027126
(87) International publication number: WO 2003/104244

(56) References cited:
- EP-A- 0 191 259
- PELLNY, PAUL-MICHAEL ET AL: "Reactions of Tetraalkynylsilanes (RC.tplbond.C)4Si (R = Ph, tBu, SiMe3) with Titanocene and Zirconocene Complexes" ORGANOMETALLICS (2000), 19(6), 1198-1200, 2000, XP002223950
- CORRIU, ROBERT J. P. ET AL: "(Ethynylhydrosilane)cobalt carbonyl complexes. Reactivity of the silicon-hydrogen bond" ORGANOMETALLICS (1990), 9(7), 2086-91, 1990, XP002223951
- CHEMICAL ABSTRACTS, vol. 63, no. 5, 1965 Columbus, Ohio, US; abstract no. 5670h, HARTMANN, H. ET AL: "New acetylene compounds with organosubstituted Si, Ge, Sn, Pb" column 5670; XP002223953 & NATURWISSENSCHAFTEN (1965), 52(11), 304, 1965,
- BOUDIN, A. ET AL: "Reactivity of dianionic hexacoordinated silicon complexes toward nucleophiles: a new route to organosilanes from silica" ORGANOMETALLICS (1988), 7(5), 1165-71, 1988, XP002223952

## Description

The present invention relates to alkynylsilanes and, more particularly, to high energy fuels and rocket propellants containing an alkynylsilane.

Several alkynylsilanes have been previously prepared by other investigators and described in the literature. Examples include trimethylsilylacetylene and trimethylsilyl -1 propyne (both articles of commerce), and tetraethynylsilane. However, while the mono-and di-ethynyl silanes heretofore described in the literature are stable, attempts to incorporate three or four acetylene moieties have resulted in unstable compounds. Davidsohn, W. and Henry,M., J. Organometallic Chem., (1966) 5,29, describe tetraethynylsilane as an autosublimable solid at room temperature that tends to explode on rapid heating. Due to the instability of tetraethynylsilane, it has only been isolated in small quantities and identified by its mass and infrared spectra. The instability of the tri-and tetra substituted ethynylsilanes has limited further investigation of these compounds.

Prior art rocket propellants typically contain kerosene or a particular kerosene fraction including paraffins, naphthalene and aromatics known as RP-1. Compounds with high internal bond energies have recently been investigated in an effort to develop fuels at lower cost and increased performance. One such candidate is a heptane known as quadricyclane which has been proposed as an additive to or replacement for RP-1 or kerosene, as set forth in U.S. Pat. No. 5,616,882 to Nichols et al., which is incorporated herein by reference.

Pellny, Paul-Michael et al Organometallics (2000), 19(6), 1198-1200,2000 describes reactions of branched tetraalkynylsilanes with titanocene and zirconcene complexes.

Corriu, Robert J.P. et al, Organometallics (1990), 9(7)m 2086-91, 1990., discloses various reactions involving (ethynylhydrosilane) cobalt carbonyl complexes.

EP0191259 discloses the use of a hexacoordinate silicon complex in the preparation of organosilanes.

Chemical Abstracts, Columbus, Ohio, US, Vol. 63 00 00 1965, No. 5, discloses acetylene compounds with organosubstituted Si, Ge, Sn, and Pb.

Boudin, A. et al, Organometallics (1988), 7(5), 1165-71, 1988 discloses the preparation of organosilanes by reacting catechol with silica to form a complex which is then reacted with Grignard or organolithium reagents.

### SUMMARY OF THE INVENTION

The present invention is directed to the use of alkynylsilanes as fuels and rocket propellants.

The present invention comprises the use, as a fuel, of an alkynylsilane, wherein said alkynylsilane is represented by the formula (I), (II), (III) or (IV): 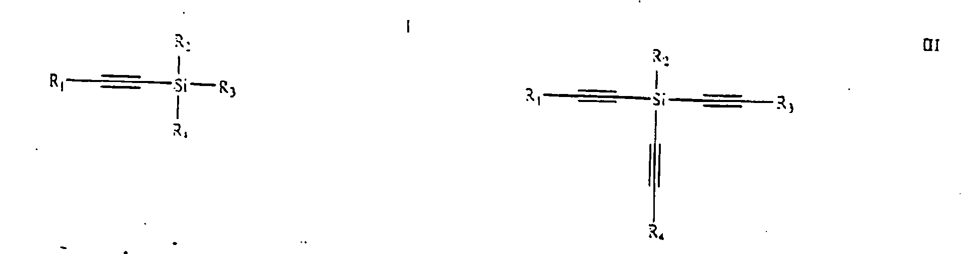 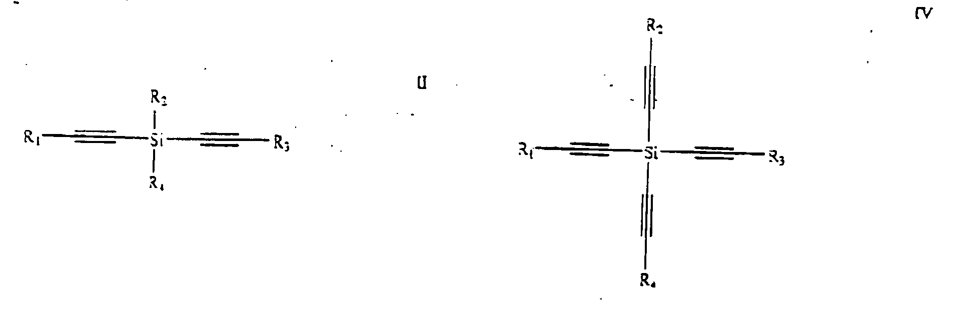 wherein R₁, R₂, R₃, and R₄ are the same or different and represent hydrogen, an alkyl group having 1 to 10 carbon atoms, an alkenyl group having 2 to 10 carbon atoms, an aryl group having 6 to 10 carbon atoms, an amino group, an alkylamino group having 1 to 10 carbon atoms, an alkoxy group having 1 to 10 carbon atoms, a mercapto group, a silyl group, an alkynylsilyl group, a siloxyl group, a silazo group or combinations thereof, provided that no more than two of R₁, R₂, R₃, R₄ are a hydrogen atom. Compounds in accordance with I, II, II, or lV above are hereinafter referred to as substituted ethynylsilanes and offer many advantages a fuels and rocket propellants, yet have not heretofore been proposed for this application. The term "substituted ethynylsilane" as used herein refers to a compound including a silicon atom substituted by one or more ethynyl groups that are substituted as described herein. The advantages of substituted ethynylsilanes include:
High bond energy, resulting in high specific impulse ("ISP") when employed as rocket propellants.
Comparatively high density (typically 0.88 or higher versus 0.80 for kerosene).

Suitable for use as a fuel in conjunction with conventional oxidizers such as liquid oxygen, nitrogen tetroxide and hydrogen peroxide.

Form combustion products of low molecular weight (with the proper fuel-to-oxidizer ratio) that are non-toxic or minimally toxic.

Chemical compatibility (inertness) with non-polar fuels (e.g. kerosene) and polar fuels (e.g. methanol).

As additives to enhance the performance characteristics of conventional propellants (e.g. kerosene), many of these compounds offer a multitude of advantages over quadricyclane which has been widely promoted for this application:
Low toxicity.
Stability over a wide range of temperatures and in contact with a wide variety of metals, long shelf life.
High flash points, combustible but not flammable. Will not alter the transpiration classification or handling characteristics when added to fuels like kerosene.
Comparative ease of synthesis from readily available and inexpensive precursors.

Alkylsilane fuels can be used in a variety of applications including, but not limited to, rocket fuels for propellants, internal combustion fuels and turbine fuels.

When utilized as rocket propellants alkylsilane fuels in accordance with the present invention are brought into contact with an oxidizer to form the propellant.

### DETAILED DESCRIPTION OF THE INVENTION

The present invention is directed to the use of alkynylsilanes as fuels and rocket propellants. The substituted ethynylsilanes as described herein can provide high energy fuels and rocket propellants.

The term "alkyl group" as used herein includes straight chain, branched chain and cyclic alkyl groups. The alkyl groups may have 1 to 10, more specifically 1 to 6 and in certain embodiments, 1 to 3 carbon atoms. The alkyl groups on the ethynylsilanes described herein may be substituted with one or more functional groups, e. g. , amine, hydroxyl, an olefinic group such as vinyl or an allyl group, or the like.

If two or more of the ethynyl groups are unsubstituted, the molecule tends to become more unstable. To our knowledge, this instability is severe and has only been documented in the case of the tri-and tetraethynylsilanes-the unsubstituted ethynyl groups. Without wishing to be bound by theory, it is believed that compounds that contain more than two alkyl-substituted acetylene or ethynyl groups will exhibit enhanced stability over the less alkyl-substituted molecules - even if the other sites are unsubstituted.

In addition to alkyl groups, the ethynyl groups can also be substituted with alkenyl (up to C10), aryl (up to C10), or combinations of alkyl, alkenyl (C2-10), and aryl groups (C6-10).

Substituted alkynylsilanes as described herein can be synthesized by reacting alkali metal alkynides with halosilanes. Using this synthetic method trimethylsilyl-1-propyne can be prepared from sodium propynilide and chlorotrimethylsilane, dimethyl-di(1-propynl)silane can be prepared from sodium propynilide and dichlorodimethylsilane, methyl-tri(1-propynyl)silane can be prepared from sodium propynilide and trichloromethylsilane and tetra(1-propynyl)silane can be prepared from sodium propynilide and tetrachlorosilane.

Alternatively, the corresponding Grignard compounds of the various alkynes can be reacted in solvents like tetrahydrofuran with chlorosilanes. Using this synthetic method trimethylsilyl-1-propyne can be prepared from 1-propynylmagnesium halide and chlorotrimethylsilane, dimethyl-dipropynylsilane can be prepared from 1-propynylmagnesium halide and dichlorodimethylsilane, methyl-tripropynylsilane can be prepared from 1-propynylmagnesium halide and trichloromethylsilane and tetrapropynylsilane can be prepared from 1-propynylmagnesium halide and tetrachlorosilane.

Examples of the alkynes useful in this reaction include propyne, 1-butyne, and higher (up to C10) acetylene and polyacetylene homologs; vinylacetylene and other enynes such as 3-methyl-3-buten-1-ynyl; phenylacetylene and other aromatic acetylenic compounds such as ethynylstyrenes, ethynylnaphthalenes, and similar compounds.

Using these convenient synthetic methods, a wide range of compounds and mixtures of compounds can be produced with properties tailored to specific applications. Properties such as specific impulse, melting point, boiling point, and solubility in various solvents can be predicted and achieved. For example, tetra(1-propynyl)silane, a symmetrical molecule, is a solid melting at 174 degrees C. The melting point can be lowered dramatically by introducing asymmetry: for example, methyl-tri(1-propynyl)silane melts at 90 degrees C. The melting point can be lowered even further to introducing a substituent of higher molecular weight ethyl-tri(l-propynyl) silane, n-propyl-tri(1-Propynyl)silane, and butyl-tri(1-propynyl)silane are all liquids at room temperature and have increasingly higher boiling points.

It has been found that when the substituents of tri- and tetra-substituted ethynylsilanes are higher homologs of acetylene (e.g., substituted ethynyl moieties having 3 to 10 carbon atoms), the stability of the molecule is increased. For example, tetra(1-propynyl)silane is stable even at temperatures exceeding 200 degrees C., while tetraethynylsilane, because of its instability, has only been isolated in small quantities and identified by its mass and infrared spectra

As a consequence of this discovery, a wide variety of stable polyalkynylsilanes and polyalkynyldisilanes have been prepared and characterized. Examples of these silanes include but are not limited to compounds of formula (III) and (IV): 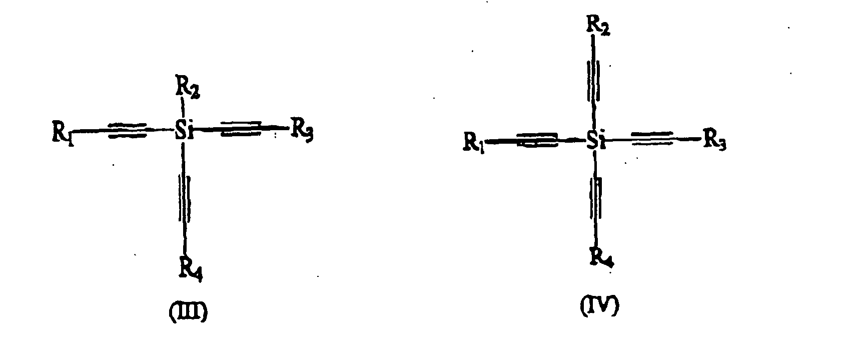 wherein R₁, R₂, R₃, and R₄ represent hydrogen, an alkyl group having 1 to 10 carbon atoms, an amino group, an alkylamino group having 1 to 10 carbon atoms, an alkoxy group having 1 to 10 carbon atoms, a mercapto group, a silyl group, a siloxyl group or a silazo group, provided that no more than two of R₁, R₂, R₃, R₄ are a hydrogen atom.

Specific examples of ethynylsilanes which may be used in accordance with the present invention include, but are not limited to, the following.

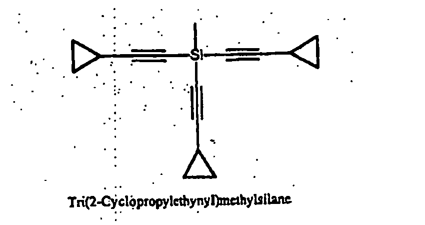

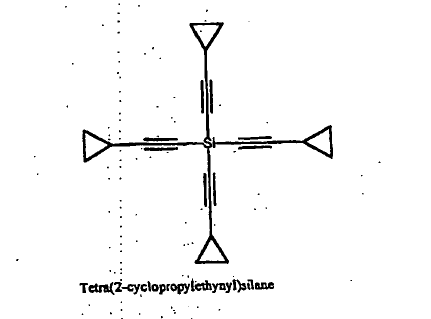

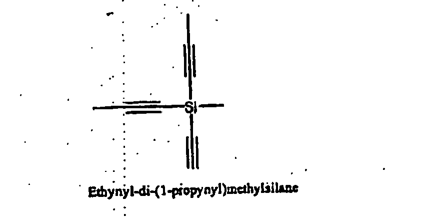

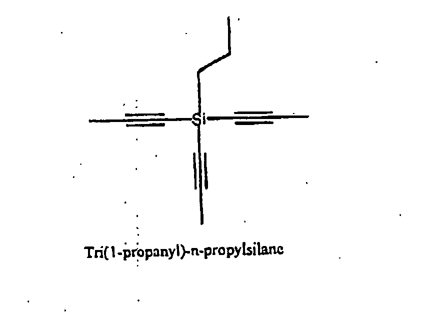

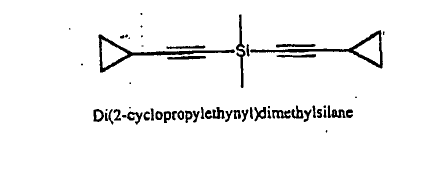

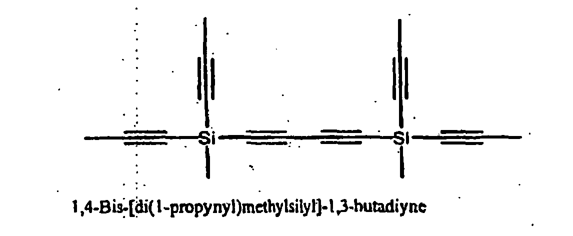

In accordance with one aspect of the present invention, substituted ethynylsilanes are utilized as additives to or replacements for conventional fuels and/or rocket propellants. The substituted ethynylsilanes of the present invention can be used in a range from about 1 to 100% by weight of the total fuel or propellant composition. Examples of fuels that can be used with the alkynylsilanes described herein include saturated hydrocarbons (e.g., heptane, hexane, octane, decane, gasoline, kerosene), unsaturated hydrocarbons (e.g., ethylene, propylene, butadienes, methylacetylene), alcohols (e.g., methanol, ethanol, propanol), organoamines and hydrazines.

When substituted ethynylsilanes are employed as rocket propellants, examples of suitable oxidizers include liquid oxygen, hydrogen peroxide, and nitrogen tetroxide. The oxidizer-to-fuel ratio is typically selected to produce combustion products with minimal molecular weights in order to maximize specific impulse. Mass ratios of oxidizer-to-fuel will typically range from 2:1 to 10:1.

Several of the polysubstituted alkynylsilane compounds investigated have the property of being hypergolic (self-igniting) when nitrogen tetroxide is employed as the oxidizer. Specific examples of alkynyl silanes that are hypergolic with nitrogen tetroxide include, but are not limited to, allyltripropynylsilane and vinyltripropynylsilane. This property is highly desirable in many applications such as maneuvering thrusters where reliable, very rapid ignition in repeated bursts is required.

The present invention is illustrated in more detail by the following non-limiting examples.

### Example 1

### Preparation of Propyltripropynylsilane

106 grams of a 17% by wt. dispersion of sodium propynilide in toluene (0.33 moles of contained sodium propynilide) and 15 grams of dimethylformamide were charged to a three-necked flask equipped with a stirrer, addition funnel, and reflux condenser. A solution of 17.7 grams (0.1 moles) of trichloropropylsilane in 10 ml of toluene was added dropwise. The reaction is exothermic, and the temperature was maintained at 50 degrees C for one hour. The reaction mixture was then quenched by adding 150 ml of 10% hydrochloric acid with vigorous agitation. The mixture was poured into a separatory funnel and allowed to separate into two layers. The supernatant organic layer was charged to a still and toluene removed by distillation to give 10.0 grams (0.053 moles) of propyltripropynlsilane (53% of theoretical yield).

### Example 2

### Preparation of Di-(2-cyclopropylethynyl) dimethylsilane

100 ml of a 2M solution of ethylmagnesiumchloride in tetrahydrofuran (0.20 moles EtMgCl contained) was charged to a three-necked flask equipped with a stirrer, addition funnel, and reflux condenser. 15 grams (0.23 moles) of ethynyl cyclopropane was added dropwise over a period of 20 minutes. After the evolution of ethane ceased, a solution of 12 grams (0.093 moles) of dichlorodimethylsilane in 10 ml of tetrahydrofuran was added dropwise. The reaction is exothermic, and the temperature was maintained at 70 degrees C for one hour. The reaction mixture was then quenched by adding 100 ml of 10% hydrochloric acid with vigorous agitation. The mixture was poured into a separatory funnel and allowed to separate into two layers. The supernatant organic layer was charged to a still and THF removed by distillation to give 16.6 grams (0.088 moles) of di-(2-cyclopropylethynyl)dimethylsilane (95% of theoretical yield).

### Example 3

### Preparation of Tri-(2-cyclopropylethynyl) methylsilane

100 ml of a 2M solution of ethylmagnesiumchloride in tetrahydrofuran (0.20 moles EtMgCl contained) was charged to a three-necked flask equipped with a stirrer, addition funnel, and reflux condenser. 15 grams (0.23 moles) of ethynyl cyclopropane was added dropwise over a period of 20 minutes. After the evolution of ethane ceased, a solution of 9 grams (0.06 moles) of trichloromethylsilane in 10 ml of tetrahydrofuran was added dropwise. The reaction is exothermic, and the temperature was maintained at 70 degrees C for one hour. The reaction mixture was then quenched by adding 100 ml of 10% hydrochloric acid with vigorous agitation. The mixture was poured into a separatory funnel and allowed to separate into two layers. The supernatant organic layer was charged to a still and THF removed by distillation to give 14.0 grams (0.058 moles) of tri-(2-cyclopropylethynyl)methylsilane (98% of theoretical yield).

## Claims

1. The use, as a fuel of an alkynylsilane, wherein said alkynylsilane is represented by the formula (I), (II), (III) or (IV): 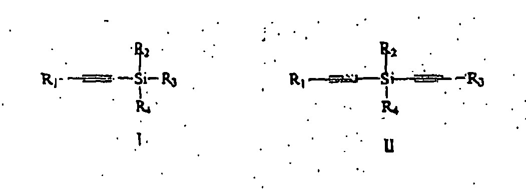 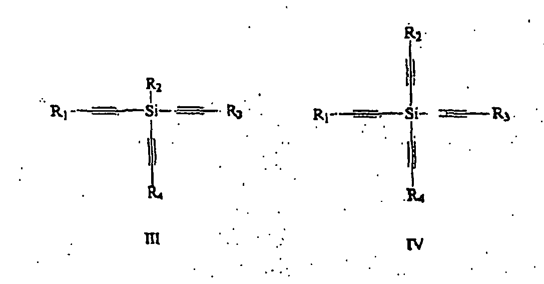 wherein R₁, R₂, R₃, and R₄ are the same or different and represent hydrogen, an alkyl group having 1 to 10 carbon atoms, an alkenyl group having 2 to 10 carbon atoms, an aryl group having 6 to 10 carbon atoms, an amino group, an alkylamino group having 1 to 10 carbon atoms, an alkoxy group having 1 to 10 carbon atoms, a mercapto group, a silyl group, an alkynylsilyl group, a siloxyl group, a silazo group or combinations thereof.

2. The use according to claim 1 wherein R₁, R₂, R₃, and R₄ are the same or different and represent hydrogen or an alkyl group having 1 to 3 carbon atoms.

3. The use according to claim 1 wherein said alkynylsilane is selected from the group consisting of trimethylsilyl-1-propyne; dimethyl-dipropynylsilane; methyl-tripropynylsilane; tetra(1 -propynyl)silane; tri(1 -propynyl)-n-propylsilane; tri(2-cyclopropylethynyl)methylsilane; tetra(2-cyclopropylethynyl)silane; di(2-cyclopropylethynyl)dimethylsilane; ethynyl-di- (1-propynyl)methylsilane; 1,4-Bis-[di (1-propynyl)methylsilyl]-1,3-butadiyne and combinations thereof.

4. The use according to claim 1 further comprising a fuel selected from the group consisting of hexane, heptane, octane, decane, methanol, ethanol, propanol, kerosene, gasoline, ethylene, propylene, butadiene, methylacetylene, organoamine, hydrazine and combinations thereof.

5. The use according to claim 1 wherein said fuel composition is hypergolic when brought into contact with nitrogen tetroxide.

6. The use according to claim 5 wherein said alkynylsilane is selected from the group consisting of allyltripropynylsilane, vinyltripropynylsilane and mixtures thereof.

7. The use according to claim 1, 2, 4 or 6 of an alkynysilane, in conjunction with an oxidiser.

8. The use according to claim 7 wherein said oxidiser is selected from the group consisting of liquid oxygen, hydrogen peroxide and nitrogen tetroxide.

## Patentansprüche

1. Verwendung, als ein Brennstoff, eines Alkinylsilans, wobei besagtes Alkinylsilan dargestellt wird durch die Formel (I), (II), (III) oder (IV): 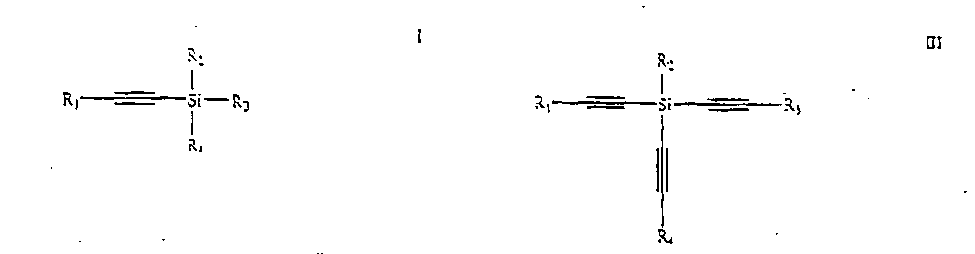 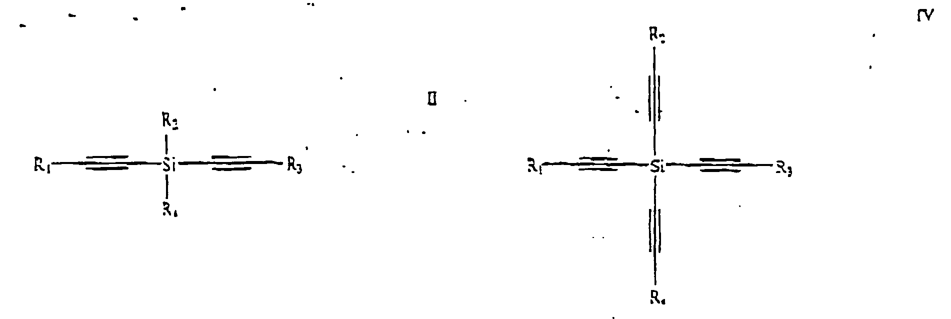 worin R₁, R₂, R₃ und R₄ identisch oder verschieden sind und für Wasserstoff, eine Alkylgruppe mit 1 bis 10 Kohlenstoffatomen, eine Alkenylgruppe mit 2 bis 10 Kohlenstoffatomen, eine Arylgruppe mit 6 bis 10 Kohlenstoffatomen, eine Aminogruppe, eine Alkylaminogruppe mit 1 bis 10 Kohlenstoffatomen, eine Alkoxygruppe mit 1 bis 10 Kohlenstoffatomen, eine Mercaptogruppe, eine Silylgruppe, eine Alkinylsilylgruppe, eine Siloxylgruppe, eine Silazogruppe oder Kombinationen davon stehen.

2. Verwendung nach Anspruch 1, **dadurch gekennzeichnet, daß** R₁, R₂, R₃ und R₄ identisch oder verschieden sind und für Wasserstoff oder eine Alkylgruppe mit 1 bis 3 Kohlenstoffatomen stehen.

3. Verwendung nach Anspruch 1, **dadurch gekennzeichnet, daß** das Alkinylsilan ausgewählt ist aus der Gruppe, bestehend aus Trimethylsilyl-1-propin; Dimethyldipropinylsilan; Methyltripropinylsilan; Tetra-(1-propinyl)silan; Tri-(1-propinyl)-n-propylsilan; Tri-(2-cyclopropylethinyl)methylsilan; Tetra-(2-cyclopropylethinyl)silan; Di-(2-cyclopropylethinyl)dimethylsilan; Ethinyl-di-(1-propinyl)methylsilan; 1,4-Bis-[di-(1-propinyl)methylsilyl]-1,3-butadiin und Kombinationen davon.

4. Verwendung nach Anspruch 1, die weiter einen Brennstoff umfaßt, der ausgewählt ist aus der Gruppe, bestehend aus Hexan, Heptan, Octan, Decan, Methanol, Ethanol, Propanol, Kerosin, Benzin, Ethylen, Propylen, Butadien, Methylacetylen, organischem Amin, Hydrazin und Kombinationen davon.

5. Verwendung nach Anspruch 1, **dadurch gekennzeichnet, daß** die Brennstoffzusammensetzung hypergol ist, wenn sie mit Stickstofftetroxid in Kontakt gebracht wird.

6. Verwendung nach Anspruch 5, **dadurch gekennzeichnet, daß** das Alkinylsilan ausgewählt ist aus der Gruppe, bestehend aus Allyltripropinylsilan, Vinyltripropinylsilan und Mischungen davon.

7. Verwendung nach Anspruch 1, 2, 4 oder 6 eines Alkinylsilans zusammen mit einem Oxidationsmittel.

8. Verwendung nach Anspruch 7, **dadurch gekennzeichnet, daß** das Oxidationsmittel ausgewählt ist aus der Gruppe, bestehend aus flüssigem Sauerstoff, Wasserstoffperoxid und Stickstofftetroxid.

## Revendications

1. Utilisation, en tant que combustible, d'un alcynylsilane, dans laquelle ledit alcynylsilane est représenté par la formule (I), (II), (III) ou (IV) : 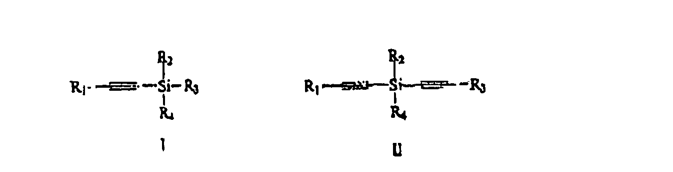 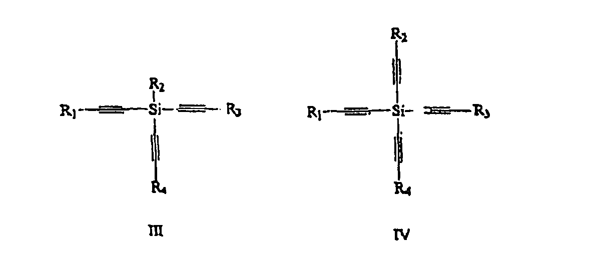 dans laquelle R₁, R₂, R₃ et R₄ sont identiques ou différents et représentent un atome d'hydrogène, un groupe alkyle ayant 1 à 10 atomes de carbone, un groupe alcényle ayant 2 à 10 atomes de carbone, un groupe aryle ayant 6 à 10 atomes de carbone, un groupe amino, un groupe alkylamino ayant 1 à 10 atomes de carbone, un groupe alcoxy ayant 1 à 10 atomes de carbone, un groupe mercapto, un groupe silyle, un groupe alcynylsilyle, un groupe siloxyle, un groupe silazo ou leurs combinaisons.

2. Utilisation selon la revendication 1, dans laquelle R₁, R₂, R₃ et R₄ sont identiques ou différents et représentent un atome d'hydrogène ou un groupe alkyle ayant 1 à 3 atomes de carbone.

3. Utilisation selon la revendication 1, dans laquelle ledit alcynylsilane est choisi dans le groupe constitué par :
le triméthylsilyl-1-propyne ;
le diméthyl-dipropynylsilane ;
le méthyl-tripropynylsilane ;
le tétra(1-propynyl)silane;
le tri(1-propynyl)-n-propylsilane;
le tri(2-cyclopropyléthynyl)méthylsilane;
le tétra(2-cyclopropyléthynyl)silane;
le di(2-cyclopropyléthynyl)diméthylsilane;
l'éthynyl-di-(1-propynyl)méthylsilane;
le 1,4-bis-[di(1-propynyl)méthylsilyl]-1,3-butadiyne
et leurs combinaisons.

4. Utilisation selon la revendication 1, comprenant en outre un combustible choisi dans le groupe constitué par l'hexane, l'heptane, l'octane, le décane, le méthanol, l'éthanol, le propanol, le kérosène, l'essence, l'éthylène, le propylène, le butadiène, le méthylacétylène, une organoamine, l'hydrazine et leurs combinaisons.

5. Utilisation selon la revendication 1, dans laquelle ladite composition combustible est hypergolique lorsqu'elle est mise en contact avec le tétraoxyde d'azote.

6. Utilisation selon la revendication 5, dans laquelle ledit alcynylsilane est choisi dans le groupe constitué par l'allyltripropynylsilane, le vinyltripropynylsilane et leurs mélanges.

7. Utilisation selon la revendication 1, 2, 4 ou 6 d'un alcynylsilane, conjointement avec un agent oxydant.

8. Utilisation selon la revendication 7, dans laquelle ledit agent oxydant est choisi dans le groupe constitué par l'oxygène liquide, le peroxyde d'hydrogène et le tétraoxyde d'azote.
